# EUROPÄISCHE PATENTANMELDUNG

(11) **EP 2 436 863 A2**
(43) Veröffentlichungstag der Anmeldung: **04.04.2012**
(21) Anmeldenummer: 11007126.3
(22) Anmeldetag: 02.09.2011
(51) Int. Cl.: E05F 15/10, E05F 15/12

(54) **Elektrischer Türbetätiger**

(30) Priorität: 30.09.2010 DE 102010037901
(71) Anmelder: Dorma GmbH&Co. Kg, 58256 Ennepetal (DE)
(72) Erfinder: Glanz, Michael, 40764 Langenfeld (DE); Lange, Siegfried, Dr., 58339 Breckerfeld (DE); Briesbeck, Bernd, D-58840 Plettenberg (DE)

(57) **Zusammenfassung**

Die Erfindung betrifft einen elektrischen Türbetätiger (1) zur Betätigung eines beweglichen Flügels wie einer Tür, ein Tor, ein Fenster oder dergleichen mit einer Einrichtung zur Energieversorgung. Erfindungsgemäß ist vorgesehen, dass der elektrische Türbetätiger (1) zur Bildung der Einrichtung der Energieversorgung wenigstens eine Brennstoffzelle (2) aufweist.

## Beschreibung

Die vorliegende Erfindung betrifft einen elektrischen Türbetätiger zur Betätigung eines beweglichen Flügels wie eine Tür, ein Tor, ein Fenster oder dergleichen mit einer Einrichtung zur Energieversorgung.

### STAND DER TECHNIK

Elektrische Türbetätiger weisen elektrisch zu versorgende Komponenten wie einen Motor zur Ausführung der Öffnungsbewegung der Tür oder wie ein Display auf, um Informationen über das Display anzuzeigen. Zur Steuerung des elektrischen Türbetätigers ist ferner eine Steuereinheit notwendig, die ebenfalls eine elektrische Energieversorgung benötigt. Zur Energieversorgung sind Einrichtungen bekannt, die als externe Einrichtungen oder als interne Einrichtungen ausgeführt sein können. Beispielsweise kann der elektrische Türbetätiger ein Netzanschlusskabel aufweisen, und der Türbetätiger bezieht seine Energieversorgung aus einem Stromnetz. Ferner kann der Türbetätiger eine autarke Energieversorgung aufweisen, die insbesondere dann von Vorteil ist, wenn der Türbetätiger am beweglichen Flügel angeordnet ist, so dass keine Kabelführung von einem ruhenden Teil auf den beweglichen Flügel vorgesehen werden muss.

Autarke Energieversorgungen sind als Batterien oder als Akkumulatoren bekannt, die regelmäßig gewechselt oder der regelmäßig wieder aufgeladen werden müssen.

Türbetätiger der hier interessierenden Art können als einfache Türschließer ausgeführt sein, die keinen Motor aufweisen, um die Tür zu öffnen. Derartige Türschließer können jedoch dennoch eine Steuerung aufweisen und beispielsweise ein Display besitzen, über das einem Benutzer Informationen anzeigbar sind. Die Steuerung und das Display benötigen dann ebenfalls eine Einrichtung zur Energieversorgung. Weiterhin können Türbetätiger als vollautomatische Türbetätiger ausgeführt sein, die einen Motor aufweisen, der die Tür sowohl öffnet als auch schließt. Die Türbetätiger mit Motorantrieb erfordern eine größere Energieversorgung, jedoch können auch derartige Türbetätiger mit autarken Einrichtungen zur Energieversorgung ausgeführt werden.

Autarke Einrichtungen zur Energieversorgung können Batterien oder Akkumulatoren umfassen, die entweder fest in der Struktur des Türbetätigers eingebaut sind oder in ein Batterie- oder Akkufach eingelegt werden können, um die Batterie oder den Akkumulator austauschbar im Türbetätiger aufzunehmen. Dabei ergibt sich jedoch der Nachteil, dass Batterien oder Akkumulatoren eine geringe Leistungsdichte aufweisen, so dass ein großes leistungsbezogenes Bauvolumen erforderlich ist. Ferner ergibt sich bei der Verwendung von Batterien oder Akkumulatoren der Nachteil, dass diese lediglich eine begrenzte Zahl von Entladungen und Aufladungen bieten, und nach einer gewissen Gebrauchsdauer an Ladekapazität verlieren können. Nicht autarke Einrichtungen zur Energieversorgung, die beispielsweise über ein fest installiertes Stromnetz gebildet werden, sind nicht in jeder Einbausituation eines Türbetätigers vorteilhaft und ein Stromnetz steht nicht an jedem Einbauort einer Tür mit einem beweglichen Flügel zur Verfügung.

Es ist daher die Aufgabe der vorliegenden Erfindung, einen elektrischen Türbetätiger zu schaffen, der eine verbesserte Einrichtung zur Energieversorgung aufweist. Insbesondere ist es die Aufgabe der vorliegenden Erfindung, einen elektrischen Türbetätiger mit einer Einrichtung zur Energieversorgung zu schaffen, die häufige Entlade- und Ladevorgänge ermöglicht und die eine große Leistungsdichte besitzt.

Diese Aufgabe wird ausgehend von einem elektrischen Türbetätiger zur Betätigung eines beweglichen Flügels gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

### OFFENBARUNG DER ERFINDUNG

Die Erfindung schließt die technische Lehre ein, dass der Türbetätiger zur Bildung der Einrichtung der Energieversorgung wenigstens eine Brennstoffzelle aufweist.

Die Erfindung geht dabei von dem Gedanken aus, Einrichtungen zur Energieversorgung, wie diese als Batterien oder Akkumulatoren aus dem Stand der Technik bekannt sind, durch die Verwendung einer Brennstoffzelle auszutauschen oder mit dieser zu kombinieren. Damit wird der Vorteil erreicht, eine autarke, integrierte Einrichtung zur Energieversorgung auf Basis einer Brennstoffzelle in einem elektrischen Türbetätiger vorzusehen. Brennstoffzellen zeichnen sich durch eine hohe Energiedichte aus, so dass die Bereitstellung einer großen Energie bei vergleichsweise kleinem Bauraum ermöglicht wird. Weiterhin bieten Brennstoffzellen als Einrichtung zur Energieversorgung den Vorteil, dass keine Selbstentladung erfolgt, beispielsweise wie diese bei einem Akkumulator oder einer Batterie erfolgt. Wird die Bereitstellung elektrischer Energie in nur kurzen Zeitabschnitten gefordert, und soll der elektrische Türbetätiger eine lange Standby-Zeit ermöglichen, können Brennstoffzellen als Einrichtung zur Energieversorgung besonders vorteilhaft eingesetzt werden.

Vorteilhafterweise ist der Brennstoff der Brennstoffzelle Wasserstoff und/oder Methanol und/oder ein weiteres Kohlenwasserstoff. Brennstoffzellen sind galvanische Zellen, die chemische Reaktionsenergie eines kontinuierlich zugeführten Brennstoffes und eines Oxidationsmittels in elektrische Energie wandeln. Brennstoffzellen zur Bildung der Einrichtung zur Energieversorgung in einem elektrischen Türbetätiger können mit Wasserstoff betrieben werden, wobei auch Methanol und/oder weitere Kohlenwasserstoffe als Energieträger zum Einsatz kommen können.

Mit besonderem Vorteil kann die Brennstoffzelle als Hybrid-Brennstoffzelle ausgebildet sein, die wenigstens eine weitere Komponente wie einen Lithium-Polymer-Akkumulator, eine Brennstoffpumpe, einen Kontrollschaltkreis und/oder einen Brennstoffspeicher aufweist. Die vorliegend als Brennstoffzelle beschriebene Einheit kann folglich weitere Funktionskomponenten umfassen, so dass die Brennstoffzelle nicht nur die galvanische Zelle selbst beschreibt, sondern weitere Komponenten wie beispielsweise eine Brennstoffpumpe, einen Kontrollschaltkreis und/oder einen Brennstoffspeicher umfassen kann. Eine Hybrid-Brennstoffzelle kombiniert eine Brennstoffzelle mit einer Lithium-Polymer-Zelle, die eine sekundäre Energiequelle darstellt und die mit einem kleinen Bauraum ausgeführt sein kann. Umfasst die Brennstoffzelle neben der eigentlichen galvanischen Zelle einen Brennstoffspeicher, bildet die Brennstoffzelle eine abgeschlossene Einheit, die ohne Zu- oder Abfuhr von Fluiden elektrische Leistung zur Verfügung stellen kann. Insbesondere das Reaktionsprodukt Wasser kann in einen speziell dafür vorgesehenen Speicher gelangen, der ebenfalls Bestandteil der Brennstoffzelle sein kann.

Gemäß einer besonders vorteilhaften Ausführungsform kann der Brennstoffspeicher auswechselbar im und/oder am Türbetätiger angeordnet sein oder der Brennstoffspeicher weist eine Einrichtung zum Nachfüllen von Brennstoff in den Brennstoffspeicher auf. Die Einrichtung zum Nachfüllen von Brennstoff in den Brennstoffspeicher kann so ausgestaltet sein, dass auch bei einer in den Türschließer eingebauten Brennstoffzelle der Brennstoffspeicher mit Brennstoff aufgefüllt werden kann. Beispielsweise kann der Brennstoff wie Wasserstoff oder Methanol aus einem Behälter, insbesondere aus einem Druckbehälter, über ein Nachfüllventil in den Brennstoffspeicher übergeben werden. Das Nachfüllventil kann an der Brennstoffzelle angeordnet sein, oder das Nachfüllventil ist in einer von der Außenseite erreichbaren Lage am Türbetätiger angebracht.

Es ist von weiterem Vorteil, wenn die Brennstoffzelle mit dem Brennstoffspeicher eine Einheit bildet und insbesondere wenn die Brennstoffzelle als Einheit mit dem Brennstoffspeicher auswechselbar im und/oder am Türbetätiger angeordnet ist. Die Brennstoffzelle kann gemeinsam mit dem Brennstoffspeicher als Wechsel-Einrichtung zur Energieversorgung ausgeführt sein, und wenn eine Brennstoffzelle mit einem Brennstoffspeicher keine elektrische Leistung mehr zur Verfügung stellen kann, wird diese gegen eine neue Brennstoffzelle oder wenigstens gegen eine Brennstoffzelle mit einem neu aufgefüllten Brennstoffspeicher als Einheit ausgetauscht. Befindet sich beispielsweise in einem Gebäude mit einer Anzahl von Türbetätigern eine Brennstoffzelle mit einem Brennstoffspeicher mehr im System als Türbetätiger vorhanden sind, so kann eine Brennstoffzelle als Wechsel-Brennstoffzelle mit zugeordnetem Brennstoffspeicher vorgesehen sein, die bei einer baugleichen Ausführung der Türbetätiger gegen eine jeweils leere Brennstoffzelle ausgetauscht werden kann. Die Einheit aus Brennstoffzelle und Brennstoffspeicher kann im Türbetätiger so angeordnet sein, dass diese durch einfache Handgriffe vorzugsweise werkzeugfrei ausgetauscht werden kann. Damit kann eine Alternative zum Nachfüllen des Brennstoffspeichers im Türbetätiger selbst vorgestellt werden, wobei auch der Brennstoffspeicher als einzelne Einheit in einem System mit einer Vielzahl von Türbetätigern gegen einen neu aufgefüllten Brennstoffspeicher ausgetauscht werden kann.

Insbesondere kann die Brennstoffzelle, der Brennstoffspeicher oder die Brennstoffzelle als Einheit mit dem Brennstoffspeicher über eine mechanisch-elektrische Ankoppelschnittstelle zur Anordnung im Türbetätiger angeordnet sein, um einen werkzeugfreien Austausch der Brennstoffzelle beziehungsweise des Brennstoffspeichers zu ermöglichen. Beispielsweise kann die Brennstoffzelle, der Brennstoffspeicher oder die Brennstoffzelle als Einheit mit dem Brennstoffspeicher an einer in Längsrichtung vorhandenen Endseite des Türbetätigers angesetzt werden, und die mechanisch-elektrische Ankoppelstelle umfasst neben einer elektrischen Steckverbindung Klips- oder Rastelemente, so dass die Einrichtung zur Energieversorgung ohne Zuhilfenahme von Werkzeugen am Türbetätiger befestigt werden kann.

Gemäß einer bevorzugten Ausführungsform kann der Türbetätiger eine Displayeinheit aufweisen, wobei die Displayeinheit mittels der Brennstoffzelle energieversorgt ist. Die Displayeinheit kann insbesondere als Niedrigenergiedisplay ausgebildet sein, insbesondere kann die Displayeinheit als ein bistabiles LCD-Display, ein Aktivmatrix-OLED-Display, ein elektrophoretisches Display und/oder ein elektrochromes Display ausgebildet sein. Die genannten Displayformen sind durch eine niedrige Energieaufnahme gekennzeichnet, so dass der Türbetätiger mit der Einrichtung zur Energieversorgung und einer entsprechend ausgebildeten Displayeinheit eine lange Betriebszeit beziehungsweise Standby-Zeit aufweist.

Gemäß einer weiteren Ausführungsform des elektrischen Türbetätigers kann in diesem eine Funkeinrichtung angeordnet sein, mit der ein Datenaustausch mittels einer in einer externen Einrichtung angeordneten Sende- und/oder Empfangseinrichtung ermöglicht ist. Die ausgetauschten Daten können Funktionsdaten des Türbetätigers, Daten zur Anzeige auf der Displayeinheit oder beispielsweise Daten zur Änderung der Funktion des Türbetätigers umfassen. Beispielsweise kann der Türbetätiger ferngesteuert aktiviert werden, oder über die externe Einrichtung werden Anzeigedaten an den Türbetätiger übermittelt, die dann auf der Displayeinheit zur Anzeige gebracht werden können. Insbesondere die Funkeinrichtung kann mit der Brennstoffzelle energieversorgt werden, während der elektrische Türbetätiger außer Funktion gesetzt ist. Damit kann der Vorteil der langen Standby-Zeit einer Brennstoffzelle ausgenutzt werden, und die Funkeinrichtung kann aktiviert sein, um von der Sende- und/oder Empfangseinrichtung Daten zu empfangen und um beispielsweise den Türbetätiger wieder zu aktivieren.

Mit besonderem Vorteil können Mittel vorgesehen sein, mit denen der Füllstand des Brennstoffspeichers detektierbar ist, wobei insbesondere eine Information über den Füllstand mittels der Funkeinrichtung an die Sende- und/oder Empfangseinrichtung übermittelbar ist. Die externe Einrichtung mit der Sende- und/oder Empfangseinrichtung kann beispielsweise ein Technikraum oder eine Schaltzentrale eines größeren Gebäudes sein, in dem eine Vielzahl elektrischer Türbetätiger eingebaut ist. Über die Funkeinrichtung kann die Sende- und/oder Empfangseinrichtung von jedem Türbetätiger eine Information über den Füllstand des Brennstoffspeichers empfangen, und es kann eine Anzeige erfolgen, die angibt, dass der Brennstoffspeicher des entsprechenden Türbetätigers mit Angabe des Einbauortes des Türbetätigers wieder aufgefüllt werden muss.

### BEVORZUGTES AUSFÜHRUNGSBEISPIEL

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: einen elektrischen Türbetätiger zur Betätigung eines bewegli-chen Flügels wie eine Tür, ein Tor, ein Fenster oder dergleichen, wobei die Einrichtung zur Energieversorgung aus einer Brenn-stoffzelle gebildet ist,
- Figur 2: den elektrischen Türbetätiger gemäß Figur 1 in einer geöffneten Ansicht, wobei die Brennstoffzelle als Einrichtung zur Energie-versorgung gezeigt ist,
- Figur 3: eine Detailansicht des elektrischen Türbetätigers gemäß der Ausführung aus Figur 2 und
- Figur 4: eine schematische Ansicht eines elektrischen Türbetätigers mit einer Brennstoffzelle als Einrichtung zur Energieversorgung und mit einer Funkeinrichtung, die über eine Datenkommunikations-strecke mit einer externen Einrichtung kommunizieren kann.

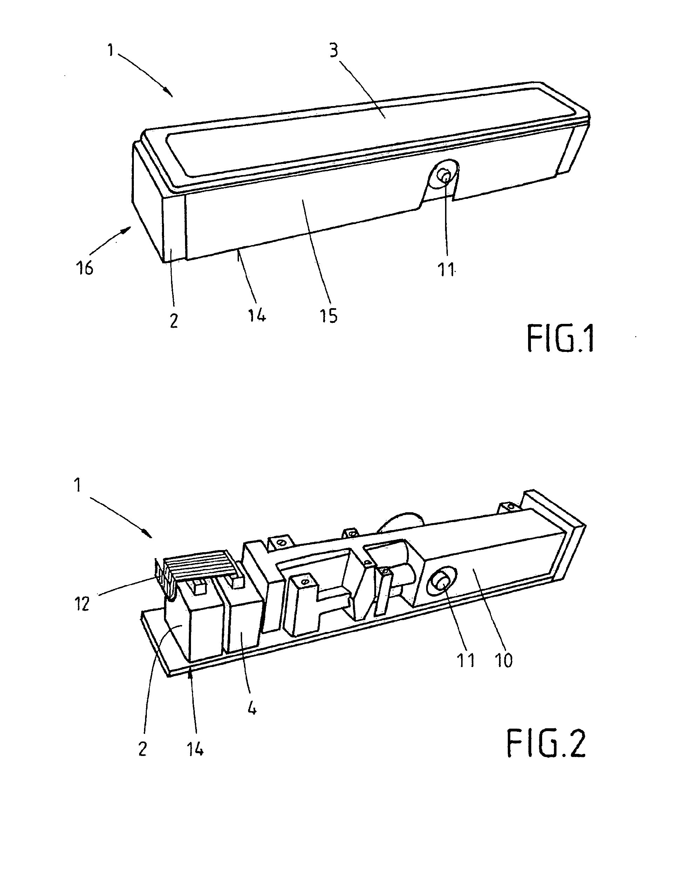

Figur 1 zeigt eine perspektivische Ansicht eines elektrischen Türbetätigers 1 zur Betätigung eines beweglichen Türflügels wie eine Tür, ein Tor, ein Fenster oder dergleichen. Der elektrische Türbetätiger 1 kann an einem Türsturz, an einer Wand oder am Türblatt selbst befestigt werden. Die Befestigung des Türbetätigers 1 erfolgt über eine Grundplatte 14, über die der Türbetätiger 1 an der Wand, am Türblatt oder am Türsturz befestigt werden kann. Der Türbetätiger 1 besitzt ferner ein Gehäuse 15, und zur mechanischen Verbindung des Abtriebs des Türbetätigers 1 mit dem Türblatt weist der Türbetätiger 1 eine Schließerwelle 11 auf.

Gemäß dem Ausführungsbeispiel des Türbetätigers 1 ist eine Brennstoffzelle 2 als Einrichtung zur Energieversorgung für den Türbetätiger 1 vorgesehen, wobei die Brennstoffzelle 2 beispielhaft an einer Endseite 16 des Türbetätigers 1 lösbar angeordnet ist. Durch die endseitige Anordnung der Brennstoffzelle 2 ist diese manuell austauschbar, so dass die Brennstoffzelle 2 ohne Entnahme des Gehäuses 15 des Türbetätigers 1 ausgetauscht werden kann. Beispielhaft ist der Türbetätiger 1 mit einer Displayeinheit 3 ausgestattet, und es können über die Displayeinheit 3 Informationen angezeigt werden. Die Informationen können beispielsweise technische Daten des Türbetätigers 1 oder Daten über den Raum, der durch die zugeordnete Tür des Türbetätigers 1 erreichbar ist, angezeigt werden. Insbesondere kann über die Displayeinheit 3 eine Information über den Energieladezustand der Brennstoffzelle 2 angezeigt werden.

Die Brennstoffzelle 2 umfasst einen Brennstoffspeicher, und die Anzeige in der Displayeinheit 3 betrifft die Information über den Füllstand des Brennstoffspeichers und beispielsweise eine Information über den Zeitpunkt des nächsten erforderlichen Austausches oder des nächsten Nachfüllvorganges zur Wiederauffüllung des Brennstoffspeichers der Brennstoffzelle.

Figur 2 zeigt den elektrischen Türbetätiger 1 in einer weiteren perspektivischen Ansicht, wobei das Gehäuse 15 entnommen ist. Damit sind die Komponenten des elektrischen Türbetätigers 1 im Einzelnen sichtbar, die auf der Grundplatte 14 angeordnet sind. Die Brennstoffzelle 2 ist endseitig auf der Grundplatte 14 angeordnet, wobei benachbart zur Brennstoffzelle 2 eine Funkeinrichtung 4 angeordnet gezeigt ist, und wobei eine elektrische Verbindung zwischen der Brennstoffzelle 2 und der Funkeinrichtung 4 über eine elektrische Leitung 12 gebildet ist. Über die Funkeinrichtung 4 ist ein Datenaustausch mittels einer in einer externen Einrichtung angeordneten Sende- und/oder Empfangseinrichtung ermöglicht. Als Funktionseinheit weist der Türbetätiger 1 ein Türbetätigermodul 10 auf, wobei das Türbetätigermodul 10 eine Schließerwelle 11 umfasst, die über ein Türgestänge mit dem Türblatt verbunden werden kann.

Beispielhaft ist der Türbetätiger 1 als einfacher Türschließer ausgebildet, und die Brennstoffzelle 2 dient als Einrichtung zur Energieversorgung für die Displayeinheit 3 und die Funkeinrichtung 4. Das Türbetätigermodul 10 umfasst lediglich eine Schließerfeder, die über die Schließerwelle 11 gekoppelt ist, und wobei bei manuellem Öffnen des Türblattes die Schließerwelle im Türbetätigermodul 10 gespannt wird, um über die gespeicherte Spannung in der Schließerfeder einen selbsttätigen Schließvorgang des Türblattes einzuleiten. Ferner umfasst das Türbetätigermodul 10 eine hydraulische Dämpfungseinheit, und es kann die Schließgeschwindigkeit des Türblattes, die durch Entspannen der Schließerfeder einhergeht, über die Hydraulikeinheit geregelt werden. Die erfindungsgemäße Anordnung einer Brennstoffzelle 2 in einem Türbetätiger kann jedoch auch in einem Türbetätiger 1 Anwendung finden, die über einen Motor verfügt, über den die Schließerwelle 11 antreibbar ist. Der elektrische Türbetätiger 1 umfasst daher lediglich wenigstens eine elektrische Komponente, ohne dass dieser als vollautomatischer Türbetätiger 1 ausgeführt sein muss.

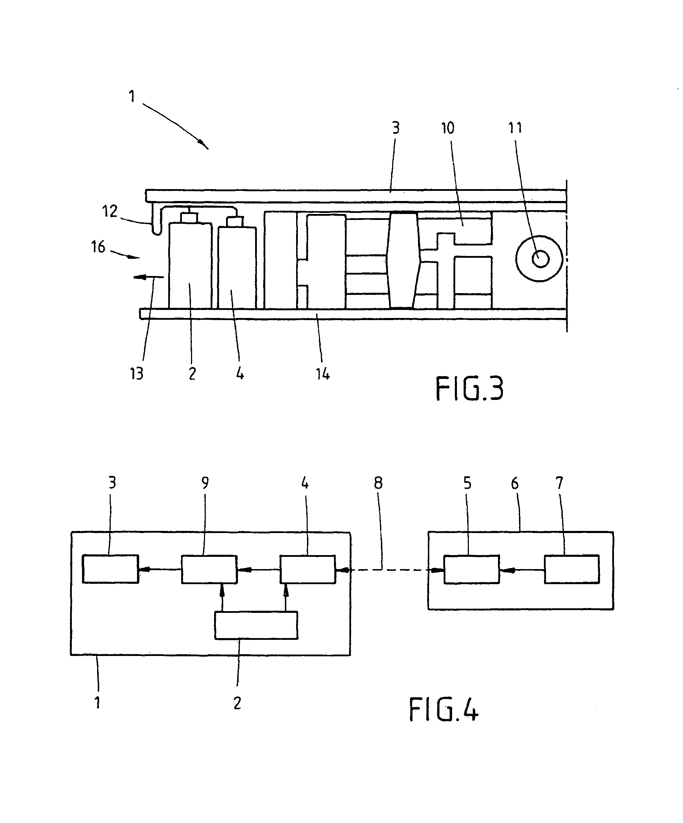

Figur 3 zeigt in einer detaillierten Ansicht einen Querschnitt des elektrischen Türbetätigers 1 gemäß Figur 2, wobei die Brennstoffzelle 2 und die Displayeinheit 3 angeordnet auf der Grundplatte 14 dargestellt sind. Ferner ist das Türbetätigermodul 10 auf der Grundplatte 14 angeordnet. Die Brennstoffzelle 2 ist über die elektrische Leitung 12 sowohl mit der Funkeinrichtung 4 als auch mit der deckelseitig angeordneten Displayeinheit 3 elektrisch verbunden. Die Ansicht zeigt, dass die Brennstoffzelle 2 auf der Endseite 16 des Türbetätigers 1 angeordnet ist, so dass die Brennstoffzelle 2 in einer Entnahmerichtung 13 aus ihrer gezeigten Position entnommen werden kann. Damit bildet die Brennstoffzelle 2 eine flexible Einheit zur Energieversorgung, die händisch entnommen werden kann, wenn das Gehäuse 15 vom Türbetätiger 1 entfernt wurde. Der Türbetätiger 1 kann auch derart ausgeführt sein, dass die Brennstoffzelle 2 auch ohne Entnahme des Gehäuses 15 vom Türbetätiger 1 entfernt und an diesem wieder angeordnet werden kann.

Figur 4 zeigt in einer schematischen Ansicht den elektrischen Türbetätiger 1, der die Brennstoffzelle 2 mit der Displayeinheit 3 sowie der Funkeinrichtung 4 aufweist. Die Displayeinheit 3 kann über einen Treiber 9 betrieben werden, wobei Informationen über die Funkeinrichtung 4 empfangen und über den Treiber 9 an die Displayeinheit 3 abgegeben werden können. Zur Energieversorgung dient die Brennstoffzelle 2, die sowohl die Funkeinrichtung 4 als auch den Treiber 9 energieversorgen kann.

Über eine Datenkommunikationsstrecke 8 kann der elektrische Türbetätiger mit einer externen Einrichtung kommunizieren, die eine Sende- und/oder Empfangseinrichtung 5 sowie eine Zentrale 7 umfassen kann. Die Zentrale 7 kann durch eine Person besetzt oder durch eine Person bedient werden, um beispielsweise mittels der Sende- und Empfangseinrichtung 5 Daten an die Funkeinrichtung 4 des Türbetätigers 1 zu übersenden. Ferner können Daten vom Türbetätiger 1 über die Funkeinrichtung 4 durch die Sende- und/oder Empfangseinrichtung 5 empfangen, und in der Zentrale 7 angezeigt und bearbeitet werden. Damit kann die externe Einrichtung 6 eine Schaltzentrale eines Hauses bilden, die mit einer Vielzahl von Türbetätigern 1 kommunizieren kann. Insbesondere kann über die externe Einrichtung 6 der Ladezustand der Brennstoffzelle 2 abgefragt werden, indem die Brennstoffzelle 2 neben der Energieversorgung der Funkeinrichtung 4 die Information an die Funkeinrichtung 4 übermittelt, welchen Füllzustand der Brennstoffspeicher der Brennstoffzelle 2 aufweist. Ist der Füllstand des Brennstoffspeichers der Brennstoffzelle 2 an einem Minimum angelangt, so kann diese Information über die Funkeinrichtung 4 und die Datenkommunikationsstrecke 8 an die Sende- und Empfangseinrichtung 5 der externen Einrichtung übermittelt werden. Nachfolgend kann die Brennstoffzelle 2 mit dem Brennstoffspeicher ausgetauscht oder es kann der Brennstoffspeicher aufgefüllt werden, während dieser im Türbetätiger 1 eingebaut verbleibt.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten, räumliche Anordnungen und Verfahrensschritte, können sowohl für sich als auch in den verschiedensten Kombinationen erfindungswesentlich sein.

### Bezugszeichenliste

- 1: elektrischer Türbetätiger
- 2: Brennstoffzelle
- 3: Displayeinheit
- 4: Funkeinrichtung
- 5: Sende- und/oder Empfangseinrichtung
- 6: externe Einrichtung
- 7: Zentrale
- 8: Datenkommunikationsstrecke
- 9: Treiber
- 10: Türbetätigermodul
- 11: Schließerwelle
- 12: elektrische Leitung
- 13: Entnahmerichtung
- 14: Grundplatte
- 15: Gehäuse
- 16: Endseite

## Patentansprüche

1. Elektrischer Türbetätiger (1) zur Betätigung eines beweglichen Flügels wie eine Tür, ein Tor, ein Fenster oder dergleichen mit einer Einrichtung zur Energieversorgung, **dadurch gekennzeichnet, dass** der Türbetätiger (1) zur Bildung der Einrichtung der Energieversorgung wenigstens eine Brennstoffzelle (2) aufweist.

2. Elektrischer Türbetätiger (1) nach Anspruch 1, **dadurch gekennzeichnet, dass** der Brennstoff der Brennstoffzelle (2) Wasserstoff und/oder Methanol und/oder ein weiters Kohlenwasserstoff ist.

3. Elektrischer Türbetätiger (1) nach Anspruch 1 oder 2, **dadurch gekennzeichnet, dass** die Brennstoffzelle (2) als Hybrid- Brennstoffzelle ausgebildet ist, die wenigstens eine weitere Komponente wie ein Lithium-Polymer-Akkumulator, eine Brennstoffpumpe, einen Kontrollschaltkreis und/oder einen Brennstoffspeicher aufweist.

4. Elektrischer Türbetätiger (1) nach einem der Ansprüche 1 bis 3, **dadurch gekennzeichnet, dass** der Brennstoffspeicher auswechselbar im und/oder am Türbetätiger (1) angeordnet ist oder dass der Brennstoffspeicher eine Einrichtung zum Nachfüllen von Brennstoff in den Brennstoffspeicher aufweist.

5. Elektrischer Türbetätiger (1) nach einem der vorgenannten Ansprüche, **dadurch gekennzeichnet, dass** die Brennstoffzelle (2) mit dem Brennstoffspeicher eine Einheit bildet und insbesondere dass die Brennstoffzelle (2) als Einheit mit dem Brennstoffspeicher auswechselbar im und/oder am Türbetätiger (1) angeordnet ist.

6. Elektrischer Türbetätiger (1) nach einem der vorgenannten Ansprüche, **dadurch gekennzeichnet, dass** die Brennstoffzelle (2), der Brennstoffspeicher oder die Brennstoffzelle (2) als Einheit mit dem Brennstoffspeicher über eine mechanisch-elektrische Ankoppelschnittstelle zur Anordnung im Türbetätiger (1) angeordnet ist, um einen werkzeugfreien Austausch der Brennstoffzelle (2) bzw. des Brennstoffspeichers zu ermöglichen.

7. Elektrischer Türbetätiger (1) nach einem der vorgenannten Ansprüche, **dadurch gekennzeichnet, dass** eine Displayeinheit (3) vorgesehen ist, welche Displayeinheit (3) mittels der Brennstoffzelle (2) energieversorgt ist.

8. Elektrischer Türbetätiger (1) nach Anspruch 7, **dadurch gekennzeichnet, dass** die Displayeinheit (3) als Niedrigenergiedisplay ausgebildet ist, insbesondere dass die Displayeinheit (3) als ein bistabiles LCD- Display, ein Aktivmatrix- OLED- Display, ein elektrophoretisches Display und/oder ein elektrochromes Display ausgebildet ist.

9. Elektrischer Türbetätiger (1) nach einem der vorgenannten Ansprüche, **dadurch gekennzeichnet, dass** eine Funkeinrichtung (4) im Türbetätiger (1) angeordnet ist, mit der ein Datenaustausch mittels einer in einer externen Einrichtung (6) angeordneten Sende- und/oder Empfangseinrichtung (5) ermöglicht ist.

10. Elektrischer Türbetätiger (1) nach einem der vorgenannten Ansprüche, **dadurch gekennzeichnet, dass** Mittel vorgesehen sind, mit denen der Füllstand des Brennstoffspeichers detektierbar ist, wobei insbesondere eine Information über den Füllstand mittels der Funkeinrichtung (4) an die Sende- und/oder Empfangseinrichtung übermittelbar sind.
